# EUROPEAN PATENT SPECIFICATION

(11) **EP 3 232 796 B1**
(45) Date of publication and mention of the grant of the patent: **10.10.2018**
(21) Application number: 15821052.6
(22) Date of filing: 18.12.2015
(51) Int. Cl.: A23C 9/13, A23C 9/142, A23C 9/15, A23L 33/17

(54) **YOGHURT WITH NATIVE WHEY PROTEINS AND PROCESSES FOR PRODUCTION THEREOF**
JOGHURT MIT NATIVEN MOLKEPROTEINEN UND VERFAHREN ZUR HERSTELLUNG DAVON
YOGOURT AVEC DES PROTÉINES DE LACTOSÉRUM NATIVES ET LEURS PROCÉDÉS DE PRODUCTION

(30) Priority: 19.12.2014 EP 14199350
(43) Date of publication of application: 25.10.2017
(73) Proprietor: Tine SA, 0187 Oslo (NO)
(72) Inventor: JØRGENSEN, Camilla Elise, 0592 Oslo (NO); JOHANSEN, Anne-Grethe, 1540 Vestby (NO); HOFFMANN, Tom Kristian, 1550 Hølen (NO); SKEIE, Siv Borghild, 1445 Drøbak (NO); ABRAHAMSEN, Roger Kjell, 1430 Ås (NO); RUKKE, Elling-Olav, 1514 Moss (NO)
(74) Representative: Onsagers AS
(86) International application number: PCT/EP2015/080527
(87) International publication number: WO 2016/097308

(56) References cited:
- EP-A2- 1 046 344
- US-A1- 2014 017 332
- US-A1- 2014 308 398
- GUGGISBERG, D.; EBERHARD, P.; ALBRECHT, B.: "Rheological characterization of set yoghurt produced with additives of native whey proteins", INTERNATIONAL DAIRY JOURNAL, vol. 17, 2007, pages 1353-1359, XP022261753, cited in the application
- ISABEL CELIGUETA TORRES ET AL: "Effect of microparticulated whey protein with varying content of denatured protein on the rheological and sensory characteristics of low-fat yoghurt", INTERNATIONAL DAIRY JOURNAL, ELSEVIER APPLIED SCIENCE, BARKING, GB, vol. 21, no. 9, 29 December 2010 (2010-12-29), pages 645-655, XP028097569, ISSN: 0958-6946, DOI: 10.1016/J.IDAIRYJ.2010.12.013 [retrieved on 2011-01-12]
- MATUMOTO-PINTRO P T ET AL: "Use of modified whey protein in yoghurt formulations", INTERNATIONAL DAIRY JOURNAL, ELSEVIER APPLIED SCIENCE, BARKING, GB, vol. 21, no. 1, 1 January 2011 (2011-01-01), pages 21-26, XP027450120, ISSN: 0958-6946, DOI: 10.1016/J.IDAIRYJ.2010.07.003 [retrieved on 2010-08-14]

## Description

### Field of the invention

The present invention relates to yoghurt products comprising high amounts of proteins including high amounts of native whey proteins, and methods for manufacturing such yoghurt products.

### Background of the invention

Yoghurt products are of high economic importance to dairy industry worldwide, and constantly new yoghurt varieties and concepts are presented to consumers. High protein yoghurts have been capturing more and more consumers over the latest years. Consumers' increased consciousness about health benefits of dairy proteins, and increasing amount of scientific documentation claiming health promotional effect of protein intake, bring along expanded market opportunities.

The main proteins of dairy products are casein and whey proteins. Approximately 20 % of the proteins in cow's milk are whey proteins and 80 % are caseins.

Whey proteins have been reported to; stimulate muscle protein metabolism and accretion (Tipton et al., 2007), assist in long-term maintenance of body weight (Baer et al., 2011), reduce body weight gain (Pichon et al., 2008), lower systolic blood pressure and improve vascular function in overweight and obese individuals (Pal & Ellis, 2009), and be more satiating due to increased postprandial circulating levels of amino acids, and the hormones cholecystokinin and glucagon-like peptide 1 (Hall, Millward, Long, & Morgan, 2003; Lam, Moughan, Awati & Morton, 2009).

Furthermore, preliminary results suggest that amino acids from native whey protein concentrate fractionated directly from skim milk are better absorbed in blood than amino acids from microparticulated whey proteins, low-fat milk, hydrolyzed whey proteins or whey protein concentrate (WPC 80) (Laahne, 2013).

Almaas et al. (2006) studied in vitro digestion of bovine milk by human proteolytic enzymes. They reported a faster digestion of unheated milk than heated milk. The result was explained by the probable structural changes in proteins caused by heat denaturation and aggregation of whey proteins.

Therefore, yoghurts with a high amount of whey proteins, particularly in native form, are desirable.

However, in yoghurt technology denaturation of whey proteins, and their consequently covalent association to casein micelles, is regarded as one of the premises to obtain a good yoghurt structure (Lucey & Singh, 1998; Robinson, Lucey & Tamine, 2006). Conventional heat treatment, 95 °C for 5 minutes or 80 °C for 30 minutes, give close to 100 % denaturation of β-lactoglobulin (Dannenberg & Kessler, 1987) and 75 % denaturation of α-lactalbumin (Anema, 2001).

Another important factor in yoghurt manufacture is the increase of total solids content to avoid a too weak yoghurt gel. This can be obtained by adding milk powder or by concentrating the milk by evaporation or membrane filtration (Robinson, Lucey & Tamime, 2006). From economical, nutritional and/or technological points of view skim milk powder can be replaced by whey protein concentrate powder.

Traditionally, yoghurt is prepared as follows:
- providing raw milk;
- separating the raw milk into a cream fraction and a skim milk fraction;
- optionally, standardizing the skim milk fraction to desired level of fat content;
- mixing the skim milk fraction which may have been fat standardized, with a milk powder and thereby obtain a composition with increased dry matter;
- subjecting the composition with increased dry matter to homogenization and thereby obtain a homogenized composition with increased dry matter;
- subjecting the composition with increased dry matter to heat treatment for a period of 5 minutes at 95 °C or for a period of 30 minutes at 80 °C and thereby obtain a heat treated homogenized composition with increased dry matter; and
- adding a starter culture to the heat treated homogenized composition with increased dry matter and thereby obtaining a fermented mixture.

The yoghurt product obtained by the traditional method above typically comprises:
- content of solids-non fat from 12 to 18 g/mL;
- whey protein:casein ratio of 20:80;
- 90-100% of the β-lactoglobulins in denaturated form;
- 60-90% of the α-lactoglobulins in denaturated form.

International patent application no. WO 2012/110705 discloses a whey protein product having a ratio of whey protein to casein in the range from about 25:75 to about less than 50:50, a total protein content of at least 20% on dry matter basis, and a protein content of about 2.5 to about 8% by weight, based on the weight of the product. A method of producing the said whey protein product, using microfiltration and ultrafiltration, is described. It is suggested that the whey protein product may be used in the preparation of sour milk products like yoghurt. However, nothing is mentioned about the process conditions for producing the sour milk products. Consequently, a person skilled in the art will assume that traditional manufacturing methods and conditions should be used.

Patocka, Cervenkova, Narine & Jelen (2006) and Guggisberg, Eberhard & Albrecht (2007) studied the effect of adding whey proteins to yoghurt milk after heat treatment to retain the whey proteins in their undenaturated and native state. The work of Guggisberg, Eberhard & Albrecht (2007) was related to set-style yoghurt. When whey proteins were added to heat treated yoghurt milk before fermentation a reduction in storage modulus of the yoghurts was observed (Patocka, Cervenkova, Narine & Jelen, 2006; Guggisberg, Eberhard & Albrecht, 2007). As the whey proteins were added after fermentation a rapid breakdown of yoghurt gel was observed, resulting in two separate phases comprising fluid whey and a coagulated protein mass (Patocka, Cervenkova, Narine & Jelen, 2006).

It is a challenge to find a way to produce yoghurts of good quality comprising considerable amounts of native whey proteins.

It is now surprisingly found that by modifying the temperature and optionally the time period of the heat treatment step, high quality yoghurt comprising high amounts of native whey proteins, is obtained.

### Summary of the invention

It is a main object of the present invention to provide yoghurt of good quality, both with regard to physical and sensory properties, comprising high amounts of native whey proteins, i.e. from 4 to 70 mg/mL.

Another object of the present invention is to provide yoghurt of good quality wherein the whey protein:casein ratio is higher in whey protein and lower in casein compared to traditional yoghurts.

Still another object of the present invention is to provide a method for manufacturing the yoghurts mentioned above.

These and other objects are obtained by the yoghurt and method as defined in the accompanying claims.

### Definitions

As used herein, the terms "yoghurt" and "yoghurt product" mean concentrated fermented milk (ref. Codex standard for fermented milks). Concentrated fermented milk is fermented milk where the protein content has been increased prior to fermentation to minimum 5.6 %. That is, products such as ymer, ylette, labneh and kefir which in addition to yoghurt are included in the definition of the above-mentioned concentrated fermented milk, are within the scope of the terms "yoghurt" and "yoghurt products" as used herein. The different concentrated fermented milks are characterized by the starter culture used for fermentation.

Yoghurt can be set or stirred. Set yoghurt is a type of yoghurt fermented and cooled in the final package and characterised by a three-dimensional gel matrix giving it a firm jelly like texture. Stirred yoghurt is a type of yoghurt fermented in a tank and the final coagulum is broken by stirring prior to cooling and packing. In stirred yoghurt, the three-dimensional gel matrix is no longer visible. Stirred yoghurt is a weak gel system consisting of weakly associated protein clusters.

As used herein, the term "protein" means crude protein (CP). Crude protein is total nitrogen multiplied by 6.38, not adjusted for the non-protein nitrogen (NPN). NPN and CP are analyzed by standardized IDF methods (Kjeldahl), IDF 2001 and IDF 2014, respectively.

As used herein, true protein (TP) is calculated by subtracting non-protein nitrogen (NPN) from true nitrogen (TN), and multiplying with a factor of 6.38. NPN and TN are analyzed by standardized IDF methods (Kjeldahl), IDF 2001 and IDF 2014, respectively.

As used herein, casein (C) is calculated by subtracting NPN and non-casein nitrogen (NCN) from TN, and multiplying with a factor of 6.38. NCN is analyzed by a standardized IDF method (Kjeldahl), IDF 2004.

As used herein, the term "whey protein" includes denatured and undenatured whey proteins. Undenatured whey protein is also referred to as native whey protein.

Native whey proteins consist mainly of α-lactalbumin, β-lactoglobulin A and β-lactoglobulin B. Native whey protein is directly extracted/removed from milk (preferably unpasteurized) with the use of microfiltration or ultrafiltration. Native whey protein has not been subjected to the cheese making process, and is therefore free from remnants of rennet, lactic acid bacteria, bacteriophages, somatic cells, cheese fines, and glycomacropeptide. Native whey has a neutral pH and the whey proteins are undenatured as long as the milk has not been exposed to severe heat treatment or pressure. As used herein, native whey protein (NWP) was calculated by subtracting NPN from NCN, and multiplying with a factor of 6.38. NPN and NCN are analyzed by standardized IDF methods (Kjeldahl), IDF 2001 and IDF 2004, respectively. Native α-lactalbumin, and native β-lactoglobulin A and B were quantitatively determined according to the method described by Beyer (1990).

Denatured whey protein is whey protein where the native protein molecule conformation has been changed irreversible. The native protein molecule conformation of the main whey proteins α-lactalbumin and β-lactoglobulin is globular.

As used herein, the term "native whey protein" is equivalent to the term "undenaturated whey protein".

As defined herein milk is any type of milk produced by any milk animals. Most common milk animals are cattle or cows, buffaloes, goats, sheep and camels. Less common milk animals, but included herein, are yaks, horses, reindeers and donkeys.

The major proteins in milk are whey protein and casein. In milk from cattle the ratio of whey protein to casein is typically 20 to 80.

### Detailed description of the invention

The present invention provides methods for the manufacture of a yoghurt comprising a content of protein in the range from 5.6 % to 20 % (w/w), a content of native whey protein in the range from 4 to 70 mg/mL, and a weight ratio of whey protein (i.e. native and denatured whey proteins) to casein in a range from 22:78 to 50:50 (w/w).

The invention also provides said yoghurt, which is obtainable by the methods of the invention, and which is a stirred yoghurt. In a preferred embodiment of the invention, the protein content is in the range from 5.6 % to 18 % (w/w). In a more preferred embodiment of the invention, the protein content is in the range from 5.6 % to 15 % (w/w). In another preferred embodiment of the invention, the protein content is in the range from 6 % to 18 % (w/w). In a more preferred embodiment of the invention, the protein content is in the range from 6.5 % to 18 % (w/w). In another preferred embodiment of the invention, the protein content is in the range from 7 % to 17 % (w/w). In still another preferred embodiment of the invention, the protein content is in the range from 7 % to 15 % (w/w). In a more preferred embodiment of the invention, the protein content is in the range from 7 % to 13 % (w/w). In another preferred embodiment of the invention, the protein content is in the range from 7 % to 12 % (w/w). In yet another preferred embodiment of the invention, the protein content is in the range from 8 % to 12 % (w/w), and in a most preferred embodiment of the invention, the protein content is in the range from 8 % to 11 % (w/w).

In a preferred embodiment of the invention, the content of native whey protein of the yoghurt is in the range from 4 mg/mL to 65 mg/mL. In another preferred embodiment of the invention, the content of native whey protein of the yoghurt is in the range from 4 mg/mL to 55 mg/mL. In a more preferred embodiment of the invention, the content of native whey protein of the yoghurt is in the range from 4.5 mg/mL to 65 mg/mL. In another preferred embodiment of the invention, the content of native whey protein of the yoghurt is in the range from 5 mg/mL to 60 mg/mL. In still another preferred embodiment of the invention, the content of native whey protein of the yoghurt is in the range from 5 mg/mL to 55 mg/mL. In a more preferred embodiment of the invention, the content of native whey protein of the yoghurt is in the range from 5 mg/mL to 45 mg/mL. In yet a preferred embodiment of the invention, the content of native whey protein of the yoghurt is in the range from 5 mg/mL to 40 mg/mL. In another preferred embodiment of the invention, the content of native whey protein of the yoghurt is in the range from 5.5 mg/mL to 40 mg/mL. In still another preferred embodiment of the invention, the content of native whey protein of the yoghurt is in the range from 6 mg/mL to 40 mg/mL. In a more preferred embodiment of the invention, the content of native whey protein of the yoghurt is in the range from 6 mg/mL to 30 mg/mL. In yet a preferred embodiment of the invention, the content of native whey protein of the yoghurt is in the range from 8 mg/mL to 40 mg/mL. In another preferred embodiment of the invention, the content of native whey protein of the yoghurt is in the range from 8 mg/mL to 30 mg/mL. In a more preferred embodiment of the invention, the content of native whey protein of the yoghurt is in the range from 10 mg/mL to 40 mg/mL, and in a most preferred embodiment of the invention, the content of native whey protein of the yoghurt is in the range from 10 mg/mL to 30 mg/mL.

In a preferred embodiment of the invention, the whey protein: casein weight ratio of the yoghurt is from 25:75 to 45:55 (w/w), more preferable from 25:75 to 40:60 (w/w), and most preferable from 25:75 to 35:65 (w/w).

In another preferred embodiment of the invention, 30 to 70 % of the total content of whey protein of the yoghurt is in native state.

In a further preferred embodiment of the invention, the yoghurt provided is a stirred yoghurt.

Furthermore, the present invention provides a method for manufacturing a yoghurt as defined above, comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a native whey protein concentrate by subjecting the fraction of native whey protein to ultrafiltration (UF) adapted to separate native whey protein from water;
e) mixing the casein-rich fraction and the native whey protein concentrate and thereby obtaining a mixture of casein and native whey protein wherein the whey protein to casein ratio is increased compared to the ratio of whey protein to casein in the raw milk;
f) subjecting the mixture of casein and native whey protein to heat treatment and thereby obtaining a heat treated mixture of casein and whey protein;
g) adding a starter culture to the heat treated mixture of casein and whey protein to provide a fermented mixture; and
h) cooling the fermented mixture;
wherein:
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

The raw milk provided in step a) is optionally unpasteurized.

The casein-rich fraction obtained in step c) is the retentate resulting from microfiltration. Herein, it is also mentioned MF retentate or MFR.

The fraction of native whey protein obtained in step c) is the permeate resulting from microfiltration. This fraction is also mentioned MF permeate or MFP herein.

The native whey protein concentrate obtained in step d) is the retentate resulting from ultrafiltration of the microfiltration permeate obtained in step c). Herein, it is also mentioned UF retentate or UFR.

In a preferred embodiment of the method according to the invention, the skim milk fraction obtained in step b) is subjected to microfiltration or bactofugation adapted to separate microorganisms and spores from the skim milk fraction and thereby obtain a microorganism-rich fraction and a partly sterilized skim milk fraction before subjecting the partly sterilized skim milk fraction to the microfiltration of step c).

In another preferred embodiment of the method according to the invention, the casein-rich fraction obtained in step c) has been concentrated to a volume concentration factor (CF) in the range from 1.5 to 6, preferably 1.5 to 4.5, and more preferable 1.5 to 3.5.

The microfiltration in step c) is carried out by using membranes with pore size from 0.05 µm to 0.2 µm.

The ultrafiltration in step d) is carried out by using membranes with cut-off from 1 kDa to 35 kDa.

According to one embodiment of the method of the invention, the casein-rich fraction obtained in step c) is pasteurized before subjected to mixing with the whey protein concentrate in step e).

According to another embodiment of the method of the invention, the mixture of casein and native whey protein obtained in step e) is fat standardized with addition of cream before heat treatment in step f).

According to yet another embodiment of the method of the invention, the mixture of casein and native whey protein obtained in step e) is subjected to homogenization and thereby obtaining a homogenized casein/ native whey protein mixture to be heat treated in step f).

The starter culture added in step g) to provide fermentation, is a yoghurt culture comprising *Streptococcus* subsp. *thermophilus* and *Lactobacillus delbrueckii* subsp. *bulgaricus.* Other suitable starter cultures can be used to obtain other characteristic concentrated fermented milk products, e.g. ymer or kefir (ref. Codex standard for fermented milks).

The starter culture is added in conventional amounts.

The fermentation in step g) is carried out in a time sufficient to obtain proper acidification. That is, to obtain pH about 4.6 or lower, e.g. pH 4.5.

According to one embodiment of the method of the invention, the fermented mixture obtained in step g) is stirred before cooling in step h).

According to another embodiment of the method of the invention, the fermented mixture obtained in step g) is concentrated by UF to obtain a concentrated yoghurt before cooling in step h).

The ratio of protein to lactose of the mixture that is heat treated in step f) affects the temperature/time combination at heat treatment needed to obtain denaturation of 30 to 70 % of the native whey protein in the mixture. Lactose protects the native whey proteins from being denaturated by heat. That is, if the content of lactose increases in relation to the content of native whey proteins, a higher temperature and/or time will be needed to achieve the desired denaturation. A higher lactose content results in a lower degree of denaturation, explained by the hydration effect of the lactose to the protein molecule (Spiegel (1999)).

In a preferred embodiment of the invention, the heat treatment of step f) is carried out by heating the mixture of casein and native whey protein at a temperature of 75 °C for a time period of 5 minutes, or another combination of temperature and time period providing equivalent denaturation degree as obtained by the temperature 75°C for 5 minutes.

In another preferred embodiment of the invention, the heat treatment of step f) is carried out by heating the mixture of casein and native whey protein at a temperature of 70°C for 15 minutes. In still another preferred embodiment of the invention, the heat treatment of step f) is carried out by heating the mixture of casein and native whey protein at a temperature of 80°C for 1 minute. In a further preferred embodiment of the invention, the heat treatment of step f) is carried out by heating the mixture of casein and native whey protein at a temperature of 85°C for 30 seconds. In another preferred embodiment of the invention, the heat treatment of step f) is carried out by heating the mixture of casein and native whey protein at a temperature of 90°C for 10 seconds. In yet another preferred embodiment of the invention, the heat treatment of step f) is carried out by heating the mixture of casein and native whey protein at a temperature of 95°C for 6 seconds. In another preferred embodiment of the invention, the heat treatment of step f) is carried out by heating the mixture of casein and native whey protein at a temperature of 100°C for 3 seconds, and in another preferred embodiment of the invention, at a temperature of 110°C for 2 seconds.

Typically, a short heating time is applicable when the temperature is high and vice versa.

Thus, a person known in the art will realize that other temperatures and time periods than those indicated in the preferred embodiment above, will be useful.

The method of present invention prepares a casein rich fraction (retentate) and a native whey protein fraction (permeate) by microfiltration of skim milk, and further concentrating the native whey protein fraction by ultrafiltration to a concentrate of native whey protein. This gives the option to mix a casein rich fraction and a concentrate of native whey protein in different ratios to obtain yoghurt with increased total protein content as well as increased whey protein content compared to the ratio of whey proteins and casein in regular raw milk. In addition, a modified temperature-time combination during heat treatment allows a considerable amount of the whey proteins to be retained in their native state.

In another aspect the present invention provides an alternative method for manufacturing a yoghurt as defined above, comprising the steps of:
a) providing raw milk;
b) separating the raw milk into a cream fraction and a skim milk fraction;
c) subjecting the skim milk fraction to ultrafiltration (UF) adapted to obtain concentrated milk rich in casein and whey protein in the UF retentate;
d) providing a powder or concentrate of native whey protein;
e) mixing the protein-rich UF retentate obtained in step c) and the native whey protein powder or concentrate from step d) and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
wherein:
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

In still another aspect the present invention provides a further alternative method for manufacturing a yoghurt as defined above, comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a powder of native whey protein;
e) mixing the casein-rich fraction and the powder of native whey protein and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
wherein:
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

In yet another aspect the present invention provides another further alternative method for manufacturing a yoghurt as defined above, comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a powder of native whey protein which is added to the fraction of native whey protein obtained in step c);
e) mixing the casein-rich fraction obtained in step c) and the native whey protein concentrate obtained in step d) and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
wherein:
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

The raw milk provided in step a) of the alternative methods is optionally unpasteurized.

According to one embodiment of the alternative methods, the casein-rich fraction obtained in step c) is pasteurized before subjected to mixing with the native whey protein in step e).

According to another embodiment of the alternative methods of the invention, the mixture of casein and native whey protein obtained in step e) is fat standardized with addition of cream before heat treatment in step f).

According to yet another embodiment of the alternative methods of the invention, the mixture of casein and native whey protein obtained in step e) is subjected to homogenization and thereby obtaining a homogenized casein/native whey protein mixture to be heat treated in step f).

The starter culture added in step g) to provide fermentation, is a yoghurt culture comprising *Streptococcus* subsp. *thermophilus* and *Lactobacillus delbrueckii* subsp. *bulgaricus.* Other suitable starter cultures can be used to obtain other characteristic concentrated fermented milk products, e.g. ymer or kefir (ref. Codex standard for fermented milks).

The starter culture is added in conventional amounts.

The fermentation in step g) is carried out in a time sufficient to obtain proper acidification. That is, to obtain pH about 4.6 or lower, e.g. pH 4.5.

According to one embodiment of the alternative methods of the invention, the fermented mixture obtained in step g) is stirred before cooling in step h).

According to another embodiment of the method of the invention, the fermented mixture obtained in step g) is concentrated by UF to obtain a concentrated yoghurt before cooling in step h).

In a preferred embodiment of the alternative methods of the invention, the heat treatment of step f) is carried out by heating the mixture of casein and native whey protein at a temperature of 75 °C for a time period of 5 minutes, or another combination of temperature and time period providing equivalent denaturation degree as obtained by the temperature 75°C for 5 minutes.

In another preferred embodiment of the alternative methods of the invention, the heat treatment of step f) is carried out by heating the mixture of casein and native whey protein at a temperature of 70°C for 15 minutes. In still another preferred embodiment of the alternative methods of the invention, the temperature is 80°C for 1 minute. In a further preferred embodiment of the alternative methods of the invention, the temperature is 85°C for 30 seconds. In another preferred embodiment of the alternative methods of the invention, the temperature is 90°C for 10 seconds. In yet another preferred embodiment of the alternative methods of the invention, the temperature is 95°C for 6 seconds. In another preferred embodiment of the alternative methods of the invention, the temperature of 100°C for 3 seconds, and in another preferred embodiment of the alternative methods of the invention, the temperature is 110oC for 2 seconds.

Typically, a short heating time is applicable when the temperature is high and vice versa, and a person known in the art will realize that other temperatures and time periods than those indicated in the preferred embodiment above, will be useful.

All the methods provided by the present invention renders it possible to manufacture qualitatively acceptable yoghurt containing considerably amounts of native whey proteins (a-lactalbumin, β-lactoglobulin B, and β-lactoglobulin).

In the examples below it is shown that yoghurts of 8 % protein, a whey protein to casein ratio from 25:75 to 35:65 and high amounts of native whey proteins (i.e. α-lactalbumin, 2.13-2.61 mg mL⁻¹; β-lactoglobulin B, 5.48-6.39 mg mL⁻¹; β-lactoglobulin A, 5.40-6.09 mg mL⁻¹) have been prepared by mixing concentrates of casein and native whey protein and modifying the heat treatment of yoghurt milk.

It is shown in the examples below that addition of native whey protein concentrate positively influence sensory attributes when added in low (NWP:C-ratio 23.7:76.3) or medium levels (NWP:C-ratio 34.3:65.7).

Furthermore, the examples of the present invention show that qualitatively acceptable high protein yoghurt (i.e. 8% protein) containing native whey proteins (a-lactalbumin, 2.13-2.61 mg mL⁻¹; β-lactoglobulin B, 5.48-6.39 mg mL⁻¹; β-lactoglobulin A, 5.40-6.09 mg mL⁻¹) can be produced by addition of low (whey:casein ratio 25:75) or medium (whey:casein ratio 35:65) levels of native whey protein concentrate in combination with a reduction in temperature from 95 °C for 5 minutes to 75 °C for 5 minutes.

The present invention provides yoghurt products with high amounts of native whey protein having positive nutritional and health effects.

Furthermore, the present invention provides methods of preparing nutritious and healthy yoghurt products without producing acid whey which is an unwanted by-product of low value and difficult to dispose.

### Detailed description of the drawings

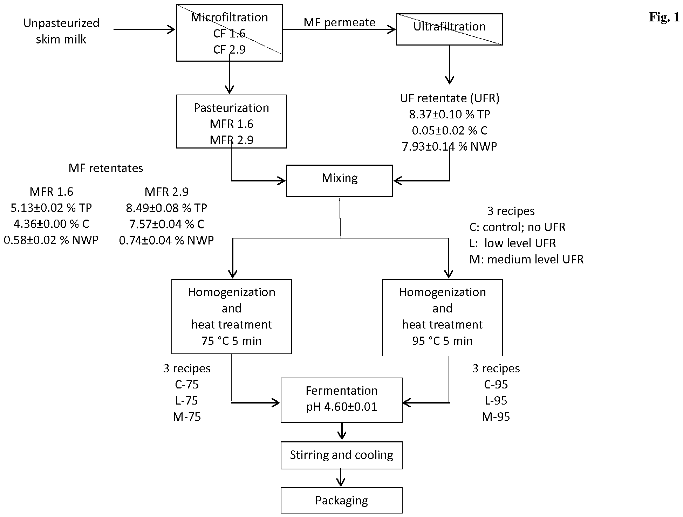

Fig. 1 shows a flow chart illustrating the production of yoghurt based on microfiltration and ultrafiltration fractions from unpasteurized skim milk according to the present invention.

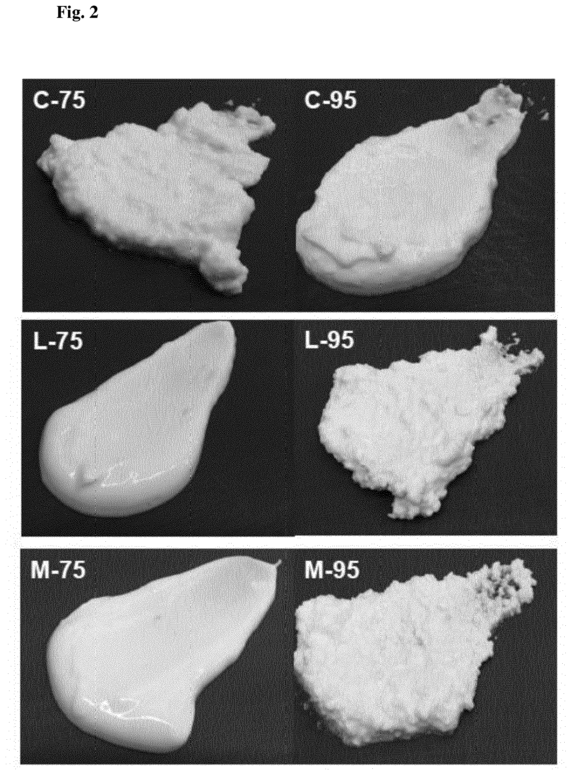

Fig. 2 shows pictures of stirred yoghurts with no addition of UFR and heat treated at 75 °C for 5 minutes (C-75), with no addition of UFR and heat treated at 95 °C for 5 minutes (C-95), added low (L) level of UFR and heat treated at 75 °C for 5 minutes (L-75), added low (L) level of UFR and heat treated at 95 °C for 5 minutes (L-95), added medium (M) level of UFR and heat treated at 75 °C for 5 minutes (M-75), and added medium (M) level of UFR and heat treated at 95 °C for 5 minutes (M-95).

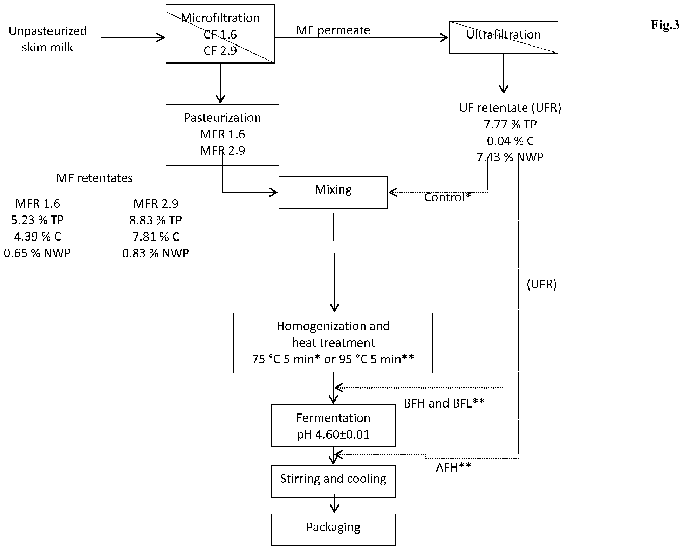

Fig. 3 shows a flow chart illustrating the production of yoghurt based on microfiltration and ultrafiltration fractions of unpasteurized skim milk wherein UFR is added after heat treatment according to Example 6 (reference example).

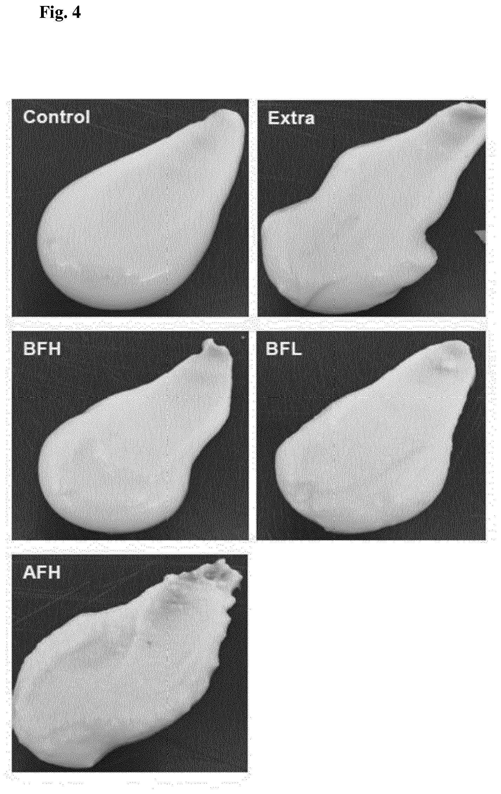

Fig. 4 shows pictures of stirred yoghurts with addition of UFR before heat treatment at 75 °C for 5 minutes and fermentation (Control), addition of UFR before heat treatment at 75 °C for 5 minutes and fermentation (Extra), added low level of UFR after heat treatment at 95 °C for 5 minutes but before fermentation (BFL), added high level of UFR after heat treatment at 95 °C for 5 minutes but before fermentation (BFH), added high level of UFR after heat treatment at 95 °C for 5 minutes and fermentation (AFH).

The invention is explained in more detail in the examples below. The examples are only meant to be illustrative and shall not be considered as limiting.

### Examples

### Example 1

Stirred and set yoghurts were produced using three whey protein:casein ratios (10:90, 25:75 or 35:65) and two heat treatment temperatures (75 or 95 °C for 5 minutes) leading to a total of six factor combinations. Two replication blocks gave a total of 12 yoghurt batches.

Cow's milk (Norwegian red cattle) was obtained from the university farm. The milk was separated (Westfalia separator AG, SA 1-01-175, Oelde, Germany) at 63 °C. Unpasteurized skim milk was temporary collected in a double-O vat (Landteknikk A/L, Trondheim, Norway) and kept at 50 ± 2 °C until microfiltration (MF) in an MF pilot plant (APV Anhydro AS, Silkeborg, Denmark). Microfiltration was performed at a uniform transmembrane pressure with a module containing seven ceramic membranes, each with pore size 0.14 µm and 0.303 m² filter area (INSIDE CéRAM™, TAMI Industries, Nyons, France). Filtration temperature varied between 55 and 58 °C with an average temperature of 56.5 °C. The permeate circulation was cooled to an average temperature of 51.7 °C using a separate cooling system according to the International patent WO 2011/115498 A1 (Hoffmann, 2011). Microfiltration retentates (MFR) with average volume concentration factors of 1.6 and 2.9 were produced. The MFRs were pasteurized (type A3-HRB, Alfa Laval, Nakskov, Denmark) at 72 °C for 15 seconds. The MF permeate was concentrated on an ultrafiltration (UF) pilot plant Alfa Laval UFS-4 (Alfa Laval, Nakskov, Denmark) containing a single spiral wound membrane (GR60PP-6338/48, Alfa Laval, Nakskov, Denmark) with 25 000 Da cut-off. Filtration temperature was kept between 45 and 50 °C with an average temperature of 47.8 °C. The ultrafiltration retentate (UFR) had an average volume concentration factor of approximately 18.8. The chemical composition of the pasteurized MFRs and UFR is shown in Table 1, while Fig. 1 gives a flow chart of the production of fractions and yoghurts. It should be noted that the terms "MFR 1.6" and MRF 2.9" in Table 1 and Fig. 1 indicate that the microfiltration retentates (MFR) has been concentrated with volume concentration factors (CF) 1.6 and 2.9, respectively.

**Table 1: Chemical composition (mean±SD from the mean, n=2) of pasteurized (72 °C 15 sec) microfiltration retentates; MFR 1.6 and MFR 2.9, and ultrafiltration retentate; UFR.**

| Components | MFR 1.6 | MFR 2.9 | UFR |
|---|---|---|---|
| Total solids (%) | 10.52±0.13 | 13.90±0.09 | 13.28±0.08 |
| CP¹ (%) | 5.32±0.02 | 8.66±0.09 | 8.77±0.09 |
| TP¹ (%) | 5.13±0.02 | 8.49±0.08 | 8.37±0.10 |
| C¹ (%) | 4.36±0.00 | 7.57±0.04 | 0.05±0.02 |
| NWP¹ (%) | 0.58±0.02 | 0.74±0.04 | 7.93±0.14 |
| NWP:C¹ (%/%) | 11.7:88.3 | 8.9:91.1 | 99.4:0.6 |
| Fat (%) | 0.22±0.01 | 0.47±0.18 | 0.11±0.04 |
| Lactose (mmol kg⁻¹) | 130.6±5.9 | 122.2±7.7 | 121.1±2.5 |
| Ash (%) | 0.90±0.01 | 1.14±0.07 | 0.58±0.11 |
| Calcium (g kg⁻¹) | 1.7±0.1 | 2.7±0.1 | 0.5±0.0 |
| Phosphorus (g kg⁻¹) | 1.3±0.0 | 2.0±0.1 | 0.5±0.0 |

| | | | |
|---|---|---|---|
| ² CP=crude protein; TP=true protein; C=casein; NWP=native whey protein. | | | |

MFR 1.6 and 2.9 and UFR were blended in suitable quantities in order to achieve mixtures with a true protein content of 8 % and native whey:casein ratios of: 10:90 (control, no addition of UFR (C)); 25:75 (low addition of UFR (L)); 35:65 (medium addition of UFR (M)). The chemical composition of the mixtures is presented in Table 2.

**Table 2: Chemical composition (mean±SD from the mean, n=2) of yoghurt mixtures. Denotations C, L and M refer to level of ultrafiltration retentate added; control (no addition); low; and medium respectively. Denotations 75 and 95 refer to heat treatment; 75 °C for 5 minutes; and 95 °C for 5 minutes respectively.**

| Components | C-75 | C-95 | L-75 | L-95 | M-75 | M-95 |
|---|---|---|---|---|---|---|
| Total solids¹ (%) | 13.49±0.04 | 13.40±0.12 | 13.50±0.23 | 13.56±0.32 | 13.30±0.16 | 13.60±0.39 |
| CP² (%) | 8.18±0.01 | 8.18±0.01 | 8.33±0.05 | 8.33±0.05 | 8.32±0.01 | 8.32±0.01 |
| TP² (%) | 8.02±0.04 | 8.02±0.04 | 8.09±0.07 | 8.09±0.07 | 8.02±0.02 | 8.02±0.02 |
| C² (%) | 7.10±0.00 | 7.10±0.00 | 6.00±0.09 | 6.00±0.09 | 5.08±0.01 | 5.08±0.01 |
| NWP² (%) | 0.75±0.06 | 0.75±0.06 | 1.86±0.01 | 1.86±0.01 | 2.65±0.02 | 2.65±0.02 |
| NWP:C² (%/%) | 9.6:90.4 | 9.6:90.4 | 23.7:76.3 | 23.7:76.3 | 34.3:65.7 | 34.3:65.7 |
| Native α-LA¹ (mg mL⁻¹) | 0.77±0.03 | 0.28±0.06 | 2.13±0.03 | 0.21±0.00 | 2.61±0.09 | 0.16±0.02 |
| Native α-LA¹ (%) | 75.0±3.4 | 27.6±6.44 | 53.6±1.1 | 5.4±0.1 | 45.2±2.4 | 2.7±0.2 |
| Native β-LG B¹ (mg mL⁻¹) | 1.51±0.15 | 0.01±0.01 | 5.48±0.61 | 0.05±0.01 | 6.39±0.16 | 0.06±0.01 |
| Native β-LG B¹(%) | 48.4±6.4 | 0.5±0.34 | 42.3±5.76 | 0.4±0.1 | 34.4±1.4 | 0.3±0.0 |
| Native β-LG A¹ (mg mL⁻¹) | 1.42±0.01 | 0.01±0.01 | 5.40±1.04 | 0.04±0.01 | 6.09±0.52 | 0.05±0.01 |
| Native β-LG A¹ (%) | 55.1±4.9 | 0.5±0.3 | 50.5±7.2 | 0.4±0.1 | 39.8±0.2 | 0.3±0.0 |
| Fat¹ (%) | 0.43±0.17 | 0.43±0.17 | 0.37±0.14 | 0.39±0.16 | 0.32±0.13 | 0.32±0.13 |
| Lactose¹ (mmol kg⁻¹) | 118.0±3.3 | 118.7±1.9 | 119.5±3.6 | 124.7±5.1 | 122.8±5.1 | 118.9±4.9 |
| Ash¹ (%) | 1.07 ± 0.04 | 1.04 ± 0.02 | 1.04 ± 0.01 | 1.05 ± 0.01 | 0.94 ± 0.04 | 0.99 ± 0.02 |
| Calcium¹ (g kg⁻¹) | 2.6±0.1 | 2.6±0.1 | 2.2±0.0 | 2.3±0.0 | 2.0±0.0 | 2.0±0.0 |
| Phosphorus¹ (g kg⁻¹) | 1.9±0.0 | 1.9±0.0 | 1.7±0.0 | 1.7±0.0 | 1.5±0.0 | 1.5±0.0 |

| | | | | | | |
|---|---|---|---|---|---|---|
| ¹Measured in mixtures after heat treatment. LA=lactalbumin, LG=lactoglobulin. Native α-LA (%) is the percentage share of native whey protein left in mixture after heat treatment compared to the amount of native whey protein in mixture before heat treatment. ² Measured in mixture before heat treatment. CP=crude protein; TP=true protein; C=casein; NWP=native whey protein. | | | | | | |

In a randomized order, the mixtures were homogenized (Rannie Machine Works Ltd., Albertslund, Denmark) at 180 bar at 55 °C and subsequently heat treated at 75 or 95 °C for 5 minutes in a double-jacketed 5 L heating tank connected to steam and cold water (Norwegian University of Life Sciences, Ås, Norway). The homogenized and heat treated mixtures were precooled and filled at 40-45 °C on sterilized 5 L stainless steel cans with lid and stirrer and tempered to 43 °C in a water bath equipped with a thermostat control. The mixtures were inoculated with 0.02 % (w/w) yoghurt culture (F-DVS YC-183, Chr. Hansen, Hørsholm, Denmark) consisting of *Streptococcus thermophilus* and *Lactobacillus delbrueckii* subsp. *bulgaricus.* At pH 4.60 ± 0.01 yoghurts in the 5 L cans were subjected to stirring for 1 minute and subsequently cooled in an ice water bath. Every tenth minute, yoghurts placed in ice water bath were stirred for 15 seconds until a yoghurt temperature of 19 ± 2 °C was reached after approximately 40 minutes. Yoghurts were then filled in suitable smaller containers (70 mL or 300 mL plastic cups with lids) and placed in a cold room (4 °C) until analyzing.

### Example 2

The stirred yoghurts prepared in Example 1 were sensory profiled with regard to appearance and consistency. Intensity of appearance attributes (coarse; granular; shiny; ropy; thickness) and consistency attributes (viscosity; mealy; gritty; smooth) of stirred yoghurts heat treated at 75 °C for 5 minutes and 95 °C for 5 minutes were analyzed on a continuous scale from 1 to 9, see Table 3. Denotations C, L and M refer to level of ultrafiltration retentate added; control (no addition); low; and medium respectively.

Increased temperature (95 °C for 5 minutes) at heat treatment of yoghurts added UFR (L or M) resulted in higher intensity for the appearance related attributes coarse, granular and thickness. The addition of UFR only seemed to increase the intensity of these attributes when the heat treatment was set to 75 °C for 5 minutes. Yoghurts added low (L) or medium (M) levels of UFR and heat treated at 75 °C for 5 minutes were shinier than the corresponding yoghurts heat treated at 95 °C for 5 minutes. Lower heat treatment of yoghurts added low or medium levels of UFR gave smoother consistency than heat treatment at 95 °C for 5 minutes. Heat treatment and addition of UFR did not affect the attributes ropy and gritty. Mealy consistency was reduced by the addition of UFR (L or M) compared to control.

**Table 3**

| Yoghurt | Coarse | Granular | Shiny | Ropy | Thickness | Viscosity | Mealy | Gritty | Smooth |
|---|---|---|---|---|---|---|---|---|---|
| C-75 | 6.4 | 7.4 | 2.5 | 1.6 | 7.3 | 4.4 | 6.2 | 2.2 | 1.4 |
| C-95 | 3.5 | 5.2 | 2.8 | 1.8 | 6.5 | 4.8 | 6.4 | 1.8 | 2.0 |
| L-75 | 1.7 | 2.2 | 6.6 | 2.5 | 5.3 | 5.5 | 3.1 | 1.4 | 5.4 |
| L-95 | 7.6 | 7.3 | 2.9 | 1.6 | 7.3 | 4.4 | 4.5 | 1.7 | 1.8 |
| M-75 | 2.4 | 3.3 | 5.7 | 2.8 | 5.8 | 5.5 | 4.0 | 1.4 | 4.7 |
| M-95 | 8.1 | 7.5 | 2.7 | 1.3 | 7.3 | 4.1 | 3.2 | 1.6 | 1.5 |

### Example 3

The yoghurts prepared in Example 1 were sensory profiled with regard to flavor. Intensity of flavor attributes (yoghurt flavor; acid; bitter; off-flavor; whey; oxidized) of stirred yoghurts heat treated at 75 °C for 5 minutes and 95 °C for 5 minutes; was evaluated on a continuous scale from 1 to 9, see Table 4. Denotations C, L, and M refer to level of ultrafiltration retentate added; control (no addition); low; and medium respectively.

The flavor attributes; yoghurt flavor, acid, bitter and off-flavor, were scarcely affected by the addition of UFR and heat treatment. Oxidized flavor or whey flavor were absent in the yoghurts.

**Table 4**

| Yoghurt | Yoghurt | Acid | Bitter | Off-flavor | Whey | Oxidized |
|---|---|---|---|---|---|---|
| C-75 | 3.3 | 4.5 | 1.7 | 1.4 | 1.1 | 1.1 |
| C-95 | 3.5 | 4.5 | 2.1 | 1.3 | 1.0 | 1.0 |
| L-75 | 3.9 | 4.9 | 1.6 | 2.1 | 1.1 | 1.1 |
| L-95 | 3.5 | 4.8 | 1.4 | 1.4 | 1.1 | 1.1 |
| M-75 | 4.1 | 4.9 | 1.4 | 1.9 | 1.0 | 1.0 |
| M-95 | 3.3 | 4.4 | 1.2 | 1.3 | 1.0 | 1.0 |

### Example 4

The yoghurts prepared in Example 1 were studied with regard to particle size distribution.

Particle size distribution of yoghurt samples heat treated at 75 °C for 5 minutes and 95 °C for 5 minutes was measured with the use of Mastersizer 3000; D₅₀ represents the particle size (µm) at which 50 % of the particles in the sample is smaller and 50 % is larger, see Table 5. Denotations C, L and M refer to level of ultrafiltration retentate added; control (no addition); low; and medium respectively.

The smallest particle size distribution appeared in yoghurts added UFR (L or M) and heat treated at 75 °C for 5 minutes. The particle size of yoghurts heat treated at 95 °C for 5 minutes increased with increasing addition of UFR, leading to largest particles in yoghurt with the highest addition of UFR. For the control yoghurt (no addition of UFR) heat treatment at 95 °C for 5 minutes gave smaller particles than 75 °C for 5 minutes.

**Table 5**

| Yoghurt | D₅₀ |
|---|---|
| C-75 | 265,5 |
| C-95 | 121,8 |
| L-75 | 35,4 |
| L-95 | 237,1 |
| M-75 | 39,4 |
| M-95 | 696,8 |

### Example 5

Qualitative evaluation of the yoghurts prepared in Example 1 was performed. Appearance, odor/flavor and consistency were evaluated on a scale from 1 to 5. The mean intensity of the yoghurts added low (L) and medium (M) levels of UFR and heat treated at 75 °C were above 3.6, which indicates that the quality is acceptable.

Fig. 2 shows pictures of the yoghurts indicating the superior appearance attributes of the yoghurts added low (L) and medium (M) levels of UFR and heat treated at 75 °C for 5 minutes compared to the corresponding yoghurts heat treated at 95 °C for 5 minutes and yoghurts not added UFR and treated at 75 and 95 °C.

### Example 6 (reference example)

Microfiltration retentates (MFR 1.6 and MFR 2.9) were produced by microfiltration (0.14 µm) of unpasteurized skim milk with volume concentration factors (CF) 1.6 and 2.9 according to the process of Example 1. The microfiltration permeate was ultrafiltered (25 kDa) to an ultrafiltration retentate (UFR) according to the process of Example 1.
The chemical composition of the pasteurized MFRs and UFR is shown in Table 6, while Fig. 3 gives a flow chart of the production of fractions and yoghurts. The terms "MFR 1.6" and "MRF 2.9" indicate that the microfiltration retentates (MFR) has been concentrated with volume concentration factors (CF) 1.6 and 2.9, respectively.

**Table 6: Chemical composition of pasteurized (72 °C 15 sec) microfiltration retentates; MFR 1.6 and MFR 2.9. and ultrafiltration retentate; UFR.**

| Components | MFR 1.6 | MFR 2.9 | UFR |
|---|---|---|---|
| Total solids (%) | 10.50 | 14.07 | 12.64 |
| CP¹ (%) | 5.42 | 9.01 | 8.09 |
| TP¹ (%) | 5.23 | 8.83 | 7.77 |
| C¹ (%) | 4.39 | 7.81 | 0.04 |
| NWP¹ (%) | 0.65 | 0.83 | 7.43 |
| NWP:C¹ (%/%) | 12.9:87.1 | 9.6:90.4 | 99.4:0.6 |
| Fat (%) | 0.22 | 0.34 | 0.06 |
| Lactose (mmol kg⁻¹) | 145.7 | 137.5 | 148.0 |
| Ash (%) | 0.87 | 1.19 | 0.58 |

| | | | |
|---|---|---|---|
| ² CP=crude protein; TP=true protein; C=casein; NWP=native whey protein. | | | |

A control mixture, representing a yoghurt sample prepared according to the present invention, was made by blending UFR with the MFRs to a protein content of about 8 % and whey protein:casein ratio 30:70. The control mixture was homogenized and heat treated at 75 °C for 5 minutes, fermented to a pH of 4.60, stirred and cooled. Mixtures named before fermentation high (BFH) and before fermentation low (BFL) were made by homogenizing and heat treating mixtures of MFRs at a heat treatment temperature of 95 °C for 5 minutes. High or low amount of UFR was added to the heat treated mixtures to a whey protein:casein ratio of 30:70 or 20:80 respectively. Subsequently the mixtures were fermented to pH 4.60, stirred and cooled. A mixture named after fermentation high (AFH) was made in the same way as BFH, but instead of adding the UFR to the mixture before fermentation, it was added after fermentation but before stirring and cooling. The whey protein:casein ratio in AFH was theoretically 30:70. The chemical composition of the mixtures is presented in Table 7.

**Table 7: Chemical composition of yoghurt mixtures. Denotations 75 and 95 refer to heat treatment; 75 °C for 5 minutes; and 95 °C for 5 minutes respectively.**

| Components | Control-75 | BFH-95 | BFL-95 | AFH-95 |
|---|---|---|---|---|
| Total solids¹ (%) | 13.24 | 13.37 | 13.43 | 13.48³ |
| CP² (%) | 8.33 | 8.43³ | 8.43³ | 8.43³ |
| TP² (%) | 8.07 | 8.23³ | 8.23³ | 8.23³ |
| C² (%) | 5.47 | 7.23³ | 7.23³ | 7.23³ |
| NWP² (%) | 2.35 | 0.81³ | 0.81³ | 0.81³ |
| NWP:C² (%/%) | 30.1:69.9 | 10.0:90.0³ | 10.0:90.0³ | 10.0:90.0³ |
| Native α-LA¹ (mg mL⁻¹) | 4.06 | 3.85 | 2.23 | 0.37³ |
| Native β-LG B¹ (mg mL⁻¹) | 14.17 | 12.71 | 6.61 | 0.05³ |
| Native β-LG A¹ (mg mL⁻¹) | 8.93 | 7.60 | 3.86 | 0.02³ |
| Fat¹ (%) | 0.25 | 0.27 | 0.27 | 0.30³ |
| Lactose¹ (mmol kg⁻¹) | 136.3 | 137.7 | 135.7 | 135.9³ |
| Ash¹ (%) | 0.97 | 0.92 | 0.95 | 1.04³ |

| | | | | |
|---|---|---|---|---|
| ¹Measured in mixtures after heat treatment. LA=lactalbumin, LG=lactoglobulin. ² Measured in mixtures before heat treatment. CP=crude protein; TP=true protein; C=casein; NWP=native whey protein. ³Chemical composition of mixture before addition of UFR. | | | | |

### Example 7

The stirred yoghurts prepared in Example 6 were sensory profiled with regard to appearance and consistency. In addition to the yoghurts described in Example 6, a yoghurt named "Extra" was made in the same way as the yoghurt named "Control", but a whey protein:casein ratio of 20:80 was obtained. Intensity of appearance attributes (coarse; granular; shiny; ropy; thickness) and consistency attributes (viscosity; mealy; gritty; smooth) of stirred yoghurts was analyzed on a continuous scale from 1 to 9, see Table 8.

**Table 8**

| Yoghurt | Coarse | Granular | Shiny | Ropy | Thickness | Viscosity | Mealy | Gritty | Smooth |
|---|---|---|---|---|---|---|---|---|---|
| Control | 1.0 | 1.2 | 7.9 | 2.4 | 4.3 | 5.2 | 2.2 | 1.1 | 6.9 |
| BFH | 3.4 | 4.6 | 4.0 | 3.4 | 6.0 | 4.9 | 6.5 | 1.4 | 3.0 |
| BFL | 2.5 | 4.9 | 3.5 | 3.7 | 6.6 | 5.0 | 6.7 | 1.5 | 2.5 |
| AFH | 6.5 | 6.8 | 2.8 | 3.4 | 6.5 | 4.6 | 7.3 | 1.9 | 1.7 |
| Extra | 2.1 | 3.1 | 4,0 | 3.4 | 5.8 | 5.3 | 5.9 | 1.6 | 3.6 |

Control yoghurt obtained the lowest intensity of the attributes coarse, granular and mealy, and the highest intensity of the attributes shiny and smooth. Yoghurts BFH, BFL and AFH were perceived as granular and mealy. Also yoghurt Extra obtained relatively high intensity of the attribute mealy. Yoghurt Control and Extra were perceived as most viscous (consistency) of all the yoghurts.

### Example 8

The yoghurts prepared in Example 6 were sensory profiled with regard to flavor. Intensity of flavor attributes (yoghurt; acid; bitter; off-flavor; whey; oxidized) of stirred yoghurts was evaluated on a continuous scale from 1 to 9, see Table 9.

**Table 9**

| Yoghurt | Yoghurt | Acid | Bitter | Off-flavor | Whey | Oxidized |
|---|---|---|---|---|---|---|
| Control | 4.2 | 5.1 | 2.1 | 2.4 | 1.7 | 1.2 |
| BFH | 4.0 | 5.4 | 2.5 | 2.7 | 1.8 | 1.1 |
| BFL | 3.8 | 5.1 | 2.0 | 2.3 | 1.4 | 1.1 |
| AFH | 3.9 | 4.8 | 2.3 | 2.4 | 1.3 | 1.1 |
| Extra | 4.1 | 5.4 | 2.0 | 2.2 | 1.2 | 1.1 |

The flavor attributes; yoghurt, acid, bitter, whey, oxidized and off-flavor, were scarcely affected by the time of UFR-addition or the heat treatment temperature. Low intensities of the flavor attributes oxidized and whey were obtained.

### Example 9

The yoghurts prepared in Example 6 were studied with regard to particle size distribution measured by Mastersizer 3000, see Table 10. D₅₀ reports the particle size (µm) at which 50 % of the particles in the sample are smaller and 50 % are larger.

**Table 10**

| Yoghurt | D₅₀ |
|---|---|
| Control | 18.1 |
| BFH | 57.7 |
| BFL | 71.0 |
| AFH | 141.9 |

The smallest particle size distribution was measured in control yoghurt, and the largest particle size distribution was found in yoghurt AFH.

### Example 10

Fig. 4 shows pictures of the yoghurts prepared in Example 6.

The shiny appearance of yoghurt Control can be seen in Fig. 4. Yoghurt AFH appears as coarse and granular. BFH and BFL were perceived as mealy in the sensory analysis, however this cannot be visually judged by studying Fig. 4. BFH and BFL could visually be perceived as less shiny than yoghurt Control.

### References

Tipton, K. D., Elliott, T. A., Cree, M. G., Aarsland, A. A., Sanford, A. P. & Wolfe, R. R. (2007). Stimulation of net muscle protein synthesis by whey protein ingestion before and after exercise. Am J Physiol Endocrinol Metab, 292, 71-76
Baer, D. J., Stote, K. S., Paul, D. R., Harris, G. K., Rumpler, W. V. & Clevidence, B. A. (2011). Whey protein but not soy protein supplementation alters body weight and composition in free-living overweight and obese adults. The Journal of Nutrition*.*
Pichon, L., Potier, M., Tome, D., Mikogami, T., Laplaize, B., Martin-Rouas, C. & Fromentin, G. (2008). High-protein diets containing different milk protein fractions differently influence energy intake and adiposity in the rat. British Journal of Nutrition, 99, 739-748.
Pal, S. & Ellis, V. (2010). The chronic effects of whey proteins on blood pressure, vascular function, and inflammatory markers in overweight individuals. Obesity, 18, 1354-1359.
Hall, W. L., Millward, D. J., Long, S. J. & Morgan, L. M. (2003). Casein and whey exert different effects on plasma amino acid profiles, gastrointestinal hormone secretion and appetite. British Journal of Nutrition, 89, 239-248.
Lam, S. M. S., Moughan, P. J., Awati, A. & Morton, H. R. (2009). The influence of whey protein and glycomacropeptide on satiety in adult humans. Physiology & Behaviour, 96, 162-168.
Laahne, J. A. L. (2013). Nativt myseprotein gir større og raskere økning av aminosyrer i blod enn behandlede mysefraksjoner og lettmelk, men ikke raskere restitusjon av muskelfunksjon. MSc thesis. Norwegian school of sport sciences, Oslo, Norway.
Almaas, H., Cases, A.-L., Devold, T. G., Holm, H., Langsrud, T., Aabakken, L., Aadnoey, T. & Vegarud, G. E. (2006). In vitro digestion of bovine and caprine milk by human gastric and duodenal enzymes. International Dairy Journal, 16, 961-968. Lucey, J. A., & Singh, H. (1998). Formation and physical properties of acid milk gels: a review. Food Research International, 30, 529-542.
Robinson, R. K., Lucey, J. A. & Tamime, A. Y. (2006). Manufacture of yoghurt. In A. Y. Tamime (Ed.). Fermented Milks (pp. 53-75). Oxford, UK: Blackwell Science Ltd.
Dannenberg, F. & Kessler, H.-G. (1987). Untersuchungen zur Reaktionskinetik der Molkenprotein-Denaturierung und deren technologischer Bedeutung. Chemie-Ingenieur-Technik, 59, 575-577.
Anema, S. G. (2001). Kinetics of the Irreversible Thermal Denaturation and Disulfide Aggregation of α-Lactalbumin in Milk Samples of Various Concentrations. Food Chemistry and Toxicology, 66, 2-9.
Patocka, G., Cervenkova, R., Narine, S. & Jelen, P. (2006). Rheological behavior of dairy products as affected by soluble whey protein isolate. International Dairy Journal, 16, 399-405.
Guggisberg, D., Eberhard, P. & Albrecht, B. (2007). Rheological characterization of set yoghurt produced with additives of native whey proteins. International Dairy Journal, 17, 1353-1359.
Codex standard for fermented milks, CODEX STAN 243-2003, pp. 1-11.
IDF. (2001). Milk - Determination of nitrogen content - Part 4: Determination of non-protein-nitrogen content. IDF 20-4:2001. Brussels, Belgium: International Dairy Federation.
IDF. (2004). Milk - Determination of casein-nitrogen content - Part 1: Indirect method (Reference method). IDF 29-1:2004. Brussels, Belgium: International Dairy Federation.
IDF. (2014). Milk and milk products - Determination of nitrogen content - Part 1: Kjeldahl principle and crude protein calculation. IDF 20-1:2014. Brussels, Belgium: International Dairy Federation.
Beyer, H. J. (1990). Zum Einfluss der Proteinkonzentration auf das Denaturierungsverhalten der Molkenproteine sowie die damit verbundenen rheologischen Veranderungen. PhD thesis, Technische Universität München-Weihenstephan. München, Germany.
Spiegel, T. (1999). Whey protein aggregation under shear conditions - effects of lactose and heating temperature on aggregate size and structure. International Journal of Food Science and Technology, 34, 523-531.
Hoffmann, T. (2011). *Membrane filtration and membrane filtration assembly.* Patent (WO 2011/115498). TINE SA, Oslo, Norway.

## Claims

1. A method for manufacturing a yoghurt comprising a content of protein in the range from 5.6 % to 20 % (w/w), a content of native whey proteins in the range from 4 to 70 mg/mL, and a weight ratio of whey protein to casein in a range from 22:78 to 50:50 (w/w), comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a native whey protein concentrate by subjecting the fraction of native whey protein to ultrafiltration (UF) adapted to separate native whey protein from water;
e) mixing the casein-rich fraction and the native whey protein concentrate and thereby obtaining a mixture of casein and native whey protein wherein the whey protein to casein ratio is increased compared to the ratio of whey protein to casein in the raw milk;
f) subjecting the mixture of casein and native whey protein to heat treatment and thereby obtaining a heat treated mixture of casein and whey protein;
g) adding a starter culture to the heat treated mixture of casein and whey protein to provide a fermented mixture; and
h) cooling the fermented mixture;
**characterized in that**
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

2. The method of claim 1, wherein the skim milk fraction obtained in step b) is subjected to microfiltration or bactofugation adapted to separate microorganisms from the skim milk fraction and thereby obtaining a microorganisms-rich fraction and a partly sterilized skim milk fraction before subjecting the partly sterilized skim milk fraction to the microfiltration of step c).

3. The method of claim 1, wherein the MF in step c) is carried out by using membranes with pore size from 0.05 µm to 0.2 µm.

4. The method of claim 1, wherein the UF in step d) is carried out by using membranes with cut-off from 1 kDa to 35 kDa.

5. A method for manufacturing a yoghurt comprising a content of protein in the range from 5.6 % to 20 % (w/w), a content of native whey proteins in the range from 4 to 70 mg/mL, and a weight ratio of whey protein to casein in a range from 22:78 to 50:50 (w/w), comprising the steps of:
a) providing raw milk;
b) separating the raw milk into a cream fraction and a skim milk fraction;
c) subjecting the skim milk fraction to ultrafiltration (UF) adapted to obtain concentrated milk rich in casein and whey protein in the UF retentate;
d) providing a powder or concentrate of native whey protein;
e) mixing the protein-rich UF retentate obtained in step c) and the native whey protein powder or concentrate from step d) and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
**characterized in that**
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

6. A method for manufacturing a yoghurt comprising a content of protein in the range from 5.6 % to 20 % (w/w), a content of native whey proteins in the range from 4 to 70 mg/mL, and a weight ratio of whey protein to casein in a range from 22:78 to 50:50 (w/w), comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a powder of native whey protein;
e) mixing the casein-rich fraction and the powder of native whey protein and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
**characterized in that**
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

7. A method for manufacturing a yoghurt comprising a content of protein in the range from 5.6 % to 20 % (w/w), a content of native whey proteins in the range from 4 to 70 mg/mL, and a weight ratio of whey protein to casein in a range from 22:78 to 50:50 (w/w), comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a powder of native whey protein which is added to the fraction of native whey protein obtained in step c);
e) mixing the casein-rich fraction obtained in step c) and the native whey protein concentrate obtained in step d) and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
**characterized in that**
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

8. The method of any one of claims 1, 5, 6 or 7, wherein the casein-rich fraction obtained in step c) is pasteurized before subjected to mixing with the native whey protein concentrate in step e).

9. The method of any one of claims 1, 5, 6 or 7 wherein the mixture of casein and native whey protein obtained in step e) is subjected to homogenization and thereby obtaining a homogenized mixture of casein and native whey protein to be heat treated in step f).

10. The method of any one of claims 1, 5, 6 or 7, wherein the heat treatment of step f) is carried out by heating the mixture of casein and native whey protein at a temperature of 75 °C for a time period of 5 minutes, or another temperature and time combination providing equivalent denaturation degree as 75°C for 5 minutes.

11. The method of claim 10, wherein the heat treatment of step f) is carried out by heating the mixture of casein and native whey protein at a temperature and for a time period selected from the group consisting of: 70°C for 5 minutes, 80°C for 1 minute, 85°C for 30 seconds, 90°C for 10 seconds, 95°C for 6 seconds, 100°C for 3 seconds, and 110°C for 2 seconds.

12. The method of any one of claims 1, 5, 6 or 7, wherein the fermented mixture obtained in step g) is concentrated by UF to obtain a concentrated yoghurt before cooling in step h).

13. A yoghurt comprising a content of protein in the range from 5.6 % to 20 % (w/w), a content of native whey proteins in the range from 4 to 70 mg/mL, and a weight ratio of whey protein to casein in a range from 22:78 to 50:50 (w/w) obtainable by the method of any one of claims 1 to 12, wherein the yoghurt is a stirred yoghurt.

14. The yoghurt of claim 13, wherein the protein content is in the range chosen from 6 % to 18 % (w/w), 5.6 % to 15 % (w/w), 6 % to 18 % (w/w), 6.5 % to 18 % (w/w), 7 % to 17 % (w/w), 7 % to 15 % (w/w), 7 % to 13 % (w/w), 7 % to 12 % (w/w), 8 % to 12 % (w/w), or 8 % to 11 % (w/w).

15. The yoghurt of claim 13, wherein the content of native whey proteins is in the range chosen from 4 to 65 mg/mL, 4 to 55 mg/mL, 4.5 to 65 mg/mL, 5 to 60 mg/mL, 5 to 55 mg/mL, 5 to 45 mg/mL, 5 to 40 mg/mL, 5.5 to 40 mg/mL, 6 to 40 mg/mL, 6 to 30 mg/mL, 8 to 40 mg/mL, 8 to 30 mg/mL, 10 to 40 mg/mL, or 10 to 30 mg/mL.

16. The yoghurt of claim 13, wherein the whey protein:casein ratio is in the range chosen from 25:75 to 45:55 (w/w), 25:75 to 40:60 (w/w), or 25:75 to 35:65 (w/w).

## Patentansprüche

1. Verfahren zum Herstellen eines Joghurts, umfassend einen Proteingehalt im Bereich von 5,6 Gew.-% bis 20 Gew.-%, einen Gehalt an nativen Molkenproteinen im Bereich von 4 bis 70 mg/ml und ein Gewichtsverhältnis von Molkenprotein zu Casein im Bereich von 22:78 bis 50:50, umfassend die Schritte:
a) Bereitstellen von Rohmilch;
b) Trennen der Rohmilch in eine Rahmfraktion und eine Magermilchfraktion;
c) Durchführen einer Mikrofiltration (MF), die dazu ausgelegt ist, Casein von Molkenprotein zu trennen, an der Magermilchfraktion und dadurch Erhalten einer Casein-reichen Fraktion und einer Fraktion von nativem Molkenprotein;
d) Bereitstellen eines Konzentrats von nativem Molkenprotein durch Durchführen einer Ultrafiltration (UF), die dazu ausgelegt ist, natives Molkenprotein von Wasser zu trennen, an der Fraktion von nativem Molkenprotein;
e) Mischen der Casein-reichen Fraktion und des Konzentrats von nativem Molkenprotein und dadurch Erhalten eines Gemischs aus Casein und nativem Molkenprotein, wobei das Verhältnis von Molkenprotein zu Casein im Vergleich zu dem Verhältnis von Molkenprotein zu Casein in der Rohmilch erhöht ist;
f) Durchführen einer Wärmebehandlung an dem Gemisch aus Casein und nativem Molkenprotein und dadurch Erhalten eines wärmebehandelten Gemischs aus Casein und Molkenprotein;
g) Zugeben einer Starterkultur zu dem wärmebehandelten Gemisch aus Casein und Molkenprotein, um ein fermentiertes Gemisch bereitzustellen; und
h) Kühlen des fermentierten Gemischs;
**dadurch gekennzeichnet, dass**
- das in Schritt e) erhaltene Gemisch aus Casein und nativem Molkenprotein ein Gewichtsverhältnis von Molkenprotein zu Casein im Bereich von 22:78 bis 50:50 aufweist; und
- die Wärmebehandlung von Schritt f) durch Erwärmen des Gemischs aus Casein und nativem Molkenprotein bei einer Temperatur und für einen Zeitraum, die ausreichend sind, um eine Denaturierung von 30 bis 70 % des nativen Molkenproteins in dem Gemisch zu erhalten, durchgeführt wird.

2. Verfahren nach Anspruch 1, wobei die in Schritt b) erhaltene Magermilchfraktion einer Mikrofiltration oder Bactofugation unterzogen wird, die dazu ausgelegt ist, Mikroorganismen von der Magermilchfraktion zu trennen, und dadurch eine Mikroorganismen-reiche Fraktion und eine teilweise sterilisierte Magermilchfraktion erhalten werden, bevor die teilweise sterilisierte Magermilchfraktion der Mikrofiltration von Schritt c) unterzogen wird.

3. Verfahren nach Anspruch 1, wobei die MF in Schritt c) unter Verwendung von Membranen mit einer Porengröße von 0,05 µm bis 0,2 µm durchgeführt wird.

4. Verfahren nach Anspruch 1, wobei die UF in Schritt d) unter Verwendung von Membranen mit einer Ausschlussgrenze von 1 kDa bis 35 kDa durchgeführt wird.

5. Verfahren zum Herstellen eines Joghurts, umfassend einen Proteingehalt im Bereich von 5,6 Gew.-% bis 20 Gew.-%, einen Gehalt an nativen Molkenproteinen im Bereich von 4 bis 70 mg/ml und ein Gewichtsverhältnis von Molkenprotein zu Casein im Bereich von 22:78 bis 50:50, umfassend die Schritte:
a) Bereitstellen von Rohmilch;
b) Trennen der Rohmilch in eine Rahmfraktion und eine Magermilchfraktion;
c) Durchführen einer Ultrafiltration (UF), die dazu ausgelegt ist, konzentrierte Milch, die reich an Casein und Molkenprotein ist, in dem UF-Retentat zu erhalten, an der Magermilchfraktion;
d) Bereitstellen eines Pulvers oder Konzentrats von nativem Molkenprotein;
e) Mischen des in Schritt c) erhaltenen proteinreichen UF-Retentats und des Pulvers oder Konzentrats von nativem Molkenprotein aus Schritt d) und dadurch Erhalten eines Gemischs aus Casein und Molkenprotein;
f) Durchführen einer Wärmebehandlung an dem Gemisch aus Casein und nativem Molkenprotein und dadurch Erhalten eines wärmebehandelten Gemischs aus Casein und Molkenprotein;
g) Zugeben einer Starterkultur zu dem wärmebehandelten Gemisch aus Casein und Molkenprotein, um eine Fermentation des Gemischs bereitzustellen; und
h) Kühlen des fermentierten Gemischs;
**dadurch gekennzeichnet, dass**
- das in Schritt e) erhaltene Gemisch aus Casein und nativem Molkenprotein ein Gewichtsverhältnis von Molkenprotein zu Casein im Bereich von 22:78 bis 50:50 aufweist; und
- die Wärmebehandlung von Schritt f) durch Erwärmen des Gemischs aus Casein und nativem Molkenprotein bei einer Temperatur und für einen Zeitraum, die ausreichend sind, um eine Denaturierung von 30 bis 70 % des nativen Molkenproteins in dem Gemisch zu erhalten, durchgeführt wird.

6. Verfahren zum Herstellen eines Joghurts, umfassend einen Proteingehalt im Bereich von 5,6 Gew.-% bis 20 Gew.-%, einen Gehalt an nativen Molkenproteinen im Bereich von 4 bis 70 mg/ml und ein Gewichtsverhältnis von Molkenprotein zu Casein im Bereich von 22:78 bis 50:50, umfassend die Schritte:
a) Bereitstellen von Rohmilch;
b) Trennen der Rohmilch in eine Rahmfraktion und eine Magermilchfraktion;
c) Durchführen einer Mikrofiltration (MF), die dazu ausgelegt ist, Casein von Molkenprotein zu trennen, an der Magermilchfraktion und dadurch Erhalten einer Casein-reichen Fraktion und einer Fraktion von nativem Molkenprotein;
d) Bereitstellen eines Pulvers aus nativem Molkenprotein;
e) Mischen der Casein-reichen Fraktion und des Pulvers aus nativem Molkenprotein und dadurch Erhalten eines Gemischs aus Casein und nativem Molkenprotein;
f) Durchführen einer Wärmebehandlung an dem Gemisch aus Casein und nativem Molkenprotein und dadurch Erhalten eines wärmebehandelten Gemischs aus Casein und Molkenprotein;
g) Zugeben einer Starterkultur zu dem wärmebehandelten Gemisch aus Casein und Molkenprotein, um eine Fermentation des Gemischs bereitzustellen; und
h) Kühlen des fermentierten Gemischs;
**dadurch gekennzeichnet, dass**
- das in Schritt e) erhaltene Gemisch aus Casein und nativem Molkenprotein ein Gewichtsverhältnis von Molkenprotein zu Casein im Bereich von 22:78 bis 50:50 aufweist; und
- die Wärmebehandlung von Schritt f) durch Erwärmen des Gemischs aus Casein und nativem Molkenprotein bei einer Temperatur und für einen Zeitraum, die ausreichend sind, um eine Denaturierung von 30 bis 70 % des nativen Molkenproteins in dem Gemisch zu erhalten, durchgeführt wird.

7. Verfahren zum Herstellen eines Joghurts, umfassend einen Proteingehalt im Bereich von 5,6 Gew.-% bis 20 Gew.-%, einen Gehalt an nativen Molkenproteinen im Bereich von 4 bis 70 mg/ml und ein Gewichtsverhältnis von Molkenprotein zu Casein im Bereich von 22:78 bis 50:50, umfassend die Schritte:
a) Bereitstellen von Rohmilch;
b) Trennen der Rohmilch in eine Rahmfraktion und eine Magermilchfraktion;
c) Durchführen einer Mikrofiltration (MF), die dazu ausgelegt ist, Casein von Molkenprotein zu trennen, an der Magermilchfraktion und dadurch Erhalten einer Casein-reichen Fraktion und einer Fraktion von nativem Molkenprotein;
d) Bereitstellen eines Pulvers aus nativem Molkenprotein, das der in Schritt c) erhaltenen Fraktion von nativem Molkenprotein zugegeben wird;
e) Mischen der in Schritt c) erhaltenen Casein-reichen Fraktion und des in Schritt d) erhaltenen Konzentrats von nativem Molkenprotein und dadurch Erhalten eines Gemischs aus Casein und nativem Molkenprotein;
f) Durchführen einer Wärmebehandlung an dem Gemisch aus Casein und nativem Molkenprotein und dadurch Erhalten eines wärmebehandelten Gemischs aus Casein und Molkenprotein;
g) Zugeben einer Starterkultur zu dem wärmebehandelten Gemisch aus Casein und Molkenprotein, um eine Fermentation des Gemischs bereitzustellen; und
h) Kühlen des fermentierten Gemischs;
**dadurch gekennzeichnet, dass**
- das in Schritt e) erhaltene Gemisch aus Casein und nativem Molkenprotein ein Gewichtsverhältnis von Molkenprotein zu Casein im Bereich von 22:78 bis 50:50 aufweist; und
- die Wärmebehandlung von Schritt f) durch Erwärmen des Gemischs aus Casein und nativem Molkenprotein bei einer Temperatur und für einen Zeitraum, die ausreichend sind, um eine Denaturierung von 30 bis 70 % des nativen Molkenproteins in dem Gemisch zu erhalten, durchgeführt wird.

8. Verfahren nach einem der Ansprüche 1, 5, 6 oder 7, wobei die in Schritt c) erhaltene Caseinreiche Fraktion pasteurisiert wird, bevor sie dem Mischen mit dem Konzentrat von nativem Molkenprotein in Schritt e) unterzogen wird.

9. Verfahren nach einem der Ansprüche 1, 5, 6 oder 7, wobei das in Schritt e) erhaltene Gemisch aus Casein und nativem Molkenprotein einer Homogenisierung unterzogen wird und dadurch ein homogenisiertes Gemisch aus Casein und nativem Molkenprotein erhalten wird, das in Schritt f) einer Wärmebehandlung zu unterziehen ist.

10. Verfahren nach einem der Ansprüche 1, 5, 6 oder 7, wobei die Wärmebehandlung von Schritt f) durch Erwärmen des Gemischs aus Casein und nativem Molkenprotein bei einer Temperatur von 75 °C für einen Zeitraum von 5 Minuten oder einer anderen Kombination aus Temperatur und Zeit, die einen äquivalenten Denaturierungsgrad wie 75 °C für 5 Minuten bereitstellt, durchgeführt wird.

11. Verfahren nach Anspruch 10, wobei die Wärmebehandlung von Schritt f) durch Erwärmen des Gemischs aus Casein und nativem Molkenprotein bei einer Temperatur und für einen Zeitraum durchgeführt wird, die ausgewählt sind aus der Gruppe, bestehend aus: 70 °C für 5 Minuten, 80 °C für 1 Minute, 85 °C für 30 Sekunden, 90 °C für 10 Sekunden, 95 °C für 6 Sekunden, 100 °C für 3 Sekunden und 110 °C für 2 Sekunden.

12. Verfahren nach einem der Ansprüche 1, 5, 6 oder 7, wobei das in Schritt g) erhaltene fermentierte Gemisch mittels UF konzentriert wird, um einen konzentrierten Joghurt vor dem Kühlen in Schritt h) zu erhalten.

13. Joghurt, umfassend einen Proteingehalt im Bereich von 5,6 Gew.-% bis 20 Gew.-%, einen Gehalt an nativen Molkenproteinen im Bereich von 4 bis 70 mg/ml und ein Gewichtsverhältnis von Molkenprotein zu Casein im Bereich von 22:78 bis 50:50, der durch das Verfahren nach einem der Ansprüche 1 bis 12 erhaltbar ist, wobei es sich bei dem Joghurt um Rührjoghurt handelt.

14. Joghurt nach Anspruch 13, wobei der Proteingehalt in dem Bereich liegt, der ausgewählt ist aus 6 Gew.-% bis 18 Gew.-%, 5,6 Gew.-% bis 15 Gew.-%, 6 Gew.-% bis 18 Gew.-%, 6,5 Gew.-% bis 18 Gew.-%, 7 Gew.-% bis 17 Gew.-%, 7 Gew.-% bis 15 Gew.-%, 7 Gew.-% bis 13 Gew.-%, 7 Gew.-% bis 12 Gew.-%, 8 Gew.-% bis 12 Gew.-% oder 8 Gew.-% bis 11 Gew.-%.

15. Joghurt nach Anspruch 13, wobei der Gehalt an nativen Molkenproteinen in dem Bereich liegt, der ausgewählt ist aus 4 bis 65 mg/ml, 4 bis 55 mg/ml, 4,5 bis 65 mg/ml, 5 bis 60 mg/ml, 5 bis 55 mg/ml, 5 bis 45 mg/ml, 5 bis 40 mg/ml, 5,5 bis 40 mg/ml, 6 bis 40 mg/ml, 6 bis 30 mg/ml, 8 bis 40 mg/ml, 8 bis 30 mg/ml, 10 bis 40 mg/ml oder 10 bis 30 mg/ml.

16. Joghurt nach Anspruch 13, wobei das Molkenprotein:Casein-Gewichtsverhältnis in dem Bereich liegt, der ausgewählt ist aus 25:75 bis 45:55, 25:75 bis 40:60 oder 25:75 bis 35:65.

## Revendications

1. Procédé de fabrication d'un yoghourt comprenant une teneur en protéines dans la plage de 5,6 % à 20 % (p/p), une teneur en protéines natives de lactosérum dans la plage de 4 à 70 mg/mL, et un rapport en poids protéine de lactosérum sur caséine dans une plage de 22 : 78 à 50 : 50 (p/p), comprenant les étapes de :
a) fourniture du lait cru ;
b) séparation du lait cru en une fraction crème et une fraction lait écrémé ;
c) soumission de la fraction lait écrémé à une microfiltration (MF) adaptée pour séparer la caséine de la protéine de lactosérum et obtention ainsi d'une fraction riche en caséine et d'une fraction de protéine native de lactosérum;
d) fourniture d'un concentré de protéine native de lactosérum en soumettant la fraction de protéine native de lactosérum à une ultrafiltration (UF) adaptée pour séparer la protéine native de lactosérum de l'eau ;
e) mélange de la fraction riche en caséine et du concentré de protéine de lactosérum et obtention ainsi d'un mélange de caséine et de protéine native de lactosérum, dans lequel le rapport protéine de lactosérum sur caséine est augmenté en comparaison au rapport protéine de lactosérum sur caséine dans le lait cru ;
f) soumission du mélange de caséine et de protéine native de lactosérum à un traitement thermique et obtention ainsi d'un mélange traité thermiquement de caséine et de protéine de lactosérum ;
g) ajout d'un levain (culture starter) au mélange traité thermiquement de caséine et de protéine de lactosérum pour fournir un mélange fermenté ; et
h) refroidissement du mélange fermenté ;
**caractérisé en ce que**
- le mélange de caséine et de protéine native de lactosérum obtenu dans l'étape e) a un rapport en poids protéine de lactosérum sur caséine dans une plage de 22 : 78 à 50 : 50 ; et
- le traitement thermique de l'étape f) est effectué par chauffage du mélange de caséine et de protéine native de lactosérum à une température et pendant une durée suffisantes pour obtenir une dénaturation de 30 à 70 % de la protéine native de lactosérum du mélange.

2. Procédé selon la revendication 1, dans lequel la fraction lait écrémé obtenue dans l'étape b) est soumise à une microfiltration ou à une bactofugation adaptée pour séparer les micro-organismes de la fraction lait écrémé et obtenir ainsi une fraction riche en micro-organismes et une fraction lait écrémé partiellement stérilisée avant de soumettre la fraction lait écrémé partiellement stérilisée à la microfiltration de l'étape c).

3. Procédé selon la revendication 1, dans lequel la MF dans l'étape c) est effectuée à l'aide de membranes avec un diamètre de pore de 0,05 µm à 0,2 µm.

4. Procédé selon la revendication 1, dans lequel l'UF dans l'étape d) est effectuée à l'aide de membranes ayant un seuil de coupure de 1 kDa à 35 kDa.

5. Procédé de fabrication d'un yoghourt comprenant une teneur en protéines dans la plage de 5,6 % à 20 % (p/p), une teneur en protéines natives de lactosérum dans la plage de 4 à 70 mg/mL, et un rapport en poids protéine de lactosérum sur caséine dans une plage de 22 : 78 à 50 : 50 (p/p), comprenant les étapes suivantes :
a) fourniture du lait cru ;
b) séparation du lait cru en une fraction crème et une fraction lait écrémé ;
c) soumission de la fraction lait écrémé à une ultrafiltration (UF) adaptée pour obtenir un lait concentré riche en caséine et en protéine de lactosérum dans le rétentat d'UF ;
d) fourniture d'une poudre ou d'un concentré de protéine native de lactosérum;
e) mélange du rétentat d'UF riche en protéine obtenu dans l'étape c) et de la poudre ou du concentré de protéine de lactosérum provenant de l'étape d) et obtention ainsi d'un mélange de caséine et de protéine native de lactosérum;
f) soumission du mélange de caséine et de protéine native de lactosérum à un traitement thermique et obtention ainsi d'un mélange traité thermiquement de caséine et de protéine de lactosérum ;
g) ajout d'un levain (culture starter) au mélange traité thermiquement de caséine et de protéine de lactosérum pour fournir une fermentation du mélange ; et
h) refroidissement du mélange fermenté ;
**caractérisé en ce que**
- le mélange de caséine et de protéine native de lactosérum obtenu dans l'étape e) a un rapport en poids protéine de lactosérum sur caséine dans une plage de 22 : 78 à 50 : 50 ; et
- le traitement thermique de l'étape f) est effectué par chauffage du mélange de caséine et de protéine native de lactosérum à une température et pendant une durée suffisantes pour obtenir une dénaturation de 30 à 70 % de la protéine native de lactosérum du mélange.

6. Procédé de fabrication d'un yoghourt comprenant une teneur en protéines dans la plage de 5,6 % à 20 % (p/p), une teneur en protéines natives de lactosérum dans la plage de 4 à 70 mg/mL, et un rapport en poids protéine de lactosérum sur caséine dans une plage de 22 : 78 à 50 : 50 (p/p), comprenant les étapes suivantes :
a) fourniture du lait cru ;
b) séparation du lait cru en une fraction crème et une fraction lait écrémé ;
c) soumission de la fraction lait écrémé à une microfiltration (MF) adaptée pour séparer la caséine de la protéine de lactosérum et obtenir ainsi une fraction riche en caséine et une fraction de protéine native de lactosérum;
d) fourniture d'une poudre de protéine native de lactosérum;
e) mélange de la fraction riche en caséine et de la poudre de protéine native de lactosérum et obtention ainsi d'un mélange de caséine et de protéine native de lactosérum;
f) soumission du mélange de caséine et de protéine native de lactosérum à un traitement thermique et obtention ainsi d'un mélange traité thermiquement de caséine et de protéine de lactosérum ;
g) ajout d'une culture starter au mélange traité thermiquement de caséine et de protéine de lactosérum pour fournir une fermentation du mélange ; et
g) refroidissement du mélange fermenté ;
**caractérisé en ce que**
- le mélange de caséine et de protéine native de lactosérum obtenu dans l'étape e) a un rapport en poids protéine de lactosérum sur caséine dans une plage de 22 : 78 à 50 : 50 ; et
- le traitement thermique de l'étape f) est effectué par chauffage du mélange de caséine et de protéine native de lactosérum à une température et pendant une durée suffisantes pour obtenir une dénaturation de 30 à 70 % de la protéine native de lactosérum du mélange.

7. Procédé de fabrication d'un yoghourt comprenant une teneur en protéines dans la plage de 5,6 % à 20 % (p/p), une teneur en protéines natives de lactosérum dans la plage de 4 à 70 mg/mL, et un rapport en poids protéine de lactosérum sur caséine dans une plage de 22 : 78 à 50 : 50 (p/p), comprenant les étapes suivantes :
a) fourniture du lait cru ;
b) séparation du lait cru en une fraction crème et une fraction lait écrémé ;
c) soumission de la fraction lait écrémé à une microfiltration (MF) adaptée pour séparer une caséine d'une protéine de lactosérum et obtention ainsi d'une fraction riche en caséine et d'une fraction de protéine native de lactosérum;
d) fourniture d'une poudre de protéine native de lactosérum qui est ajoutée à la fraction de protéine native de lactosérum obtenue dans l'étape c) ;
e) mélange de la fraction riche en caséine obtenue dans l'étape c) et du concentré de protéine native de lactosérum obtenu dans l'étape d) et obtention ainsi d'un mélange de caséine et de protéine native de lactosérum;
f) soumission du mélange de caséine et de protéine native de lactosérum à un traitement thermique et obtention ainsi d'un mélange traité thermiquement de caséine et de protéine de lactosérum ;
g) ajout d'une culture starter au mélange traité thermiquement de caséine et de protéine de lactosérum pour fournir une fermentation au mélange ; et
h) refroidissement du mélange fermenté ;
**caractérisé en ce que**
- le mélange de caséine et de protéine native de lactosérum obtenu dans l'étape e) a un rapport en poids protéine de lactosérum sur caséine dans une plage de 22 : 78 à 50 : 50 ; et
- le traitement thermique de l'étape f) est effectué par chauffage du mélange de caséine et de protéine native de lactosérum à une température et pendant une durée suffisantes pour obtenir une dénaturation de 30 à 70 % de la protéine native de lactosérum du mélange.

8. Procédé selon l'une quelconque des revendications 1, 5, 6 ou 7, dans lequel la fraction riche en caséine obtenue dans l'étape c) est pasteurisée avant d'être soumise au mélange avec le concentré de protéine native de lactosérum à l'étape e) .

9. Procédé selon l'une quelconque des revendications 1, 5, 6 ou 7, dans lequel le mélange de caséine et de protéine native de lactosérum obtenu dans l'étape e) est soumis à une homogénéisation et on obtient ainsi un mélange homogénéisé de caséine et de protéine native de lactosérum à traiter thermiquement dans l'étape f).

10. Procédé selon l'une quelconque des revendications 1, 5, 6 ou 7, dans lequel le traitement thermique de l'étape f) est effectué par chauffage du mélange de caséine et de protéine native de lactosérum à une température de 75 °C pendant une durée de 5 minutes, ou à une autre combinaison de température et de temps fournissant un degré de dénaturation équivalent à 75 °C pendant 5 minutes.

11. Procédé selon la revendication 10, dans lequel le traitement thermique de l'étape f) est effectué par chauffage du mélange de caséine et de protéine de lactosérum native à une température et pendant une durée choisies dans le groupe constitué par : 70 °C pendant 5 minutes, 80 °C pendant 1 minute, 85 °C pendant 30 secondes, 90 °C pendant 10 secondes, 95 °C pendant 6 secondes, 100 °C pendant 3 secondes, et 110 °C pendant 2 secondes.

12. Procédé selon l'une quelconque des revendications 1, 5, 6 ou 7, dans lequel le mélange fermenté obtenu dans l'étape g) est concentré par UF pour obtenir un yoghourt concentré avant refroidissement dans l'étape h).

13. Yoghourt comprenant une teneur en protéines dans la plage de 5,6 % à 20 % (p/p), une teneur en protéines natives de lactosérum dans la plage de 4 à 70 mg/mL, et un rapport en poids protéine de lactosérum sur caséine dans une plage de 22 : 78 à 50 : 50 (p/p), susceptible d'être obtenu par le procédé selon l'une quelconque des revendications 1 à 12, dans lequel le yoghourt est un yoghourt brassé.

14. Yoghourt selon la revendication 13, dans lequel la teneur en protéines est dans la plage choisie parmi de 6 % à 18 % (p/p), 5,6 % à 15 % (p/p), 6 % à 18 %(p/p), 6,5 % à 18 %(p/p), 7 % à 17 % (p/p), 7 % à 15 %(p/p), 7 % à 13 %(p/p), 7 % à 12 % (p/p), 8 % à 12 %(p/p) ou 8 % à 11 %(p/p).

15. Yoghourt selon la revendication 13, dans lequel la teneur en protéines natives de lactosérum est dans la plage choisie parmi de 4 à 65 mg/mL, 4 à 55 mg/mL, 4,5 à 65 mg/mL, 5 à 60 mg/mL, 5 à 55 mg/mL, 5 à 45 mg/mL, 5 à 40 mg/mL, 5,5 à 40 mg/mL, 6 à 40 mg/mL, 6 à 30 mg/mL, 8 à 40 mg/mL, 8 à 30 mg/mL, 10 à 40 mg/mL ou 10 à 30 mg/mL.

16. Yoghourt selon la revendication 13, dans lequel le rapport protéine de lactosérum : caséine est dans la plage choisie parmi de 25 : 75 à 45 : 55 (p/p), 25 : 75 à 40 : 60 (p/p) ou 25 : 75 à 35 : 65 (p/p).
